(19) **Europäisches Patentamt / European Patent Office / Office européen des brevets**

(11) **EP 1 272 815 B1**

(12) # EUROPÄISCHE PATENTSCHRIFT

(45) Veröffentlichungstag und Bekanntmachung des Hinweises auf die Patenterteilung:
**08.08.2007 Patentblatt 2007/32**

(21) Anmeldenummer: **01940105.8**

(22) Anmeldetag: **30.03.2001**

(51) Int Cl.:
**G01C 21/34** (2006.01)

(86) Internationale Anmeldenummer:
**PCT/DE2001/001206**

(87) Internationale Veröffentlichungsnummer:
**WO 2001/075397 (11.10.2001 Gazette 2001/41)**

(54) **VERFAHREN ZUR STRASSENKLASSENBEWERTUNG IN NAVIGATIONSSYSTEMEN**

METHOD FOR THE EVALUATION OF ROAD CLASSIFICATION IN NAVIGATION SYSTEMS

PROCEDE D'EVALUATION DE CLASSES ROUTIERES DANS DES SYSTEMES DE NAVIGATION

(84) Benannte Vertragsstaaten:
**DE FR GB IT**

(30) Priorität: **30.03.2000 DE 10015936**

(43) Veröffentlichungstag der Anmeldung:
**08.01.2003 Patentblatt 2003/02**

(73) Patentinhaber: **ROBERT BOSCH GMBH**
**70442 Stuttgart (DE)**

(72) Erfinder: **NORDSIEK, Walter**
**31188 Holle (DE)**

(56) Entgegenhaltungen:
**EP-A- 0 292 897       EP-A- 0 702 210**
**EP-A- 0 987 665       US-A- 5 933 100**

EP 1 272 815 B1

**Beschreibung**

STAND DER TECHNIK

Die vorliegende Erfindung betrifft ein Verfahren zur Strassenklassenbewertung in Navigationssystemen.

Obwohl auf beliebige Informationssysteme mit einer Bewertung von bestimmten, zeitlich veränderlichen Systemparametern anwendbar, werden die vorliegende Erfindung sowie die ihr zugrunde liegende Problematik in Bezug auf ein an Bord eines Automobils befindliches Navigationssystem erläutert.

Die heutigen Navigationssysteme bestehen im wesentlichen aus folgenden Subsystemen: digitale Straßenkarte, Rechenmodul zur Fahrtroutenberechnung, Positionsbestimmungseinrichtung, Systemverwaltung, Fahrzeugsensorik zur Erkennung von Fahrzeugbewegungen, Eingabeeinheit und Ausgabeeinheit für die Bedienung und Zielführung.

In Navigationssystemen mit Zielführung ist es erforderlich, zur Berechnung des Fahrwegs, im folgenden auch als Route bezeichnet, von der geographischen Koordinate S, die meist den Fahrzeugstandort darstellt, zu einer anderen Koordinate Z als Ziel, das meist durch Ort, Straße oder Kreuzung und gegebenenfalls weitere Angaben wie eine Hausnummer spezifiziert ist, eine Bewertung der zu befahrenden Straßen vorzunehmen, um eine nach einem vorgegebenen Kriterium "optimale" Routenführung zu erreichen.

Wählt der Benutzer des Systems zum Beispiel "kurze Route" als optimal aus, so ist das Kriterium "Suche die kürzeste befahrbare Wegstrecke" für das System zur Berechnung einer Route vorgegeben. Meist führt jedoch eine solche Vorgabe nicht zu einer wirklich günstigen Wegstreckenführung, beispielsweise bei vielen Überlandverbindungen per Landstraße oder in größeren Städten mit vielen "Tempo 30-Zonen".

Daher wird oft eine "schnelle" Verbindung von S nach Z als optimal angesehen. "Schnell" bedeutet in diesem Zusammenhang, daß für die Wegstreckenberechnung die Straßen nach ihrer Art, wie etwa Autobahn, Bundesstraße, Landstraße etc. klassifiziert werden. Den einzelnen Straßenklassen werden dann bei Navigationssystemen vom Stand der Technik feste Durchschnittsgeschwindigkeiten zugeordnet, beispielsweise 100 km/h für Autobahnen, 80 km/h für Bundesstraßen, usw.. Die Routenberechnung wird dann daraufhin ausgelegt, eine Route mit insgesamt möglichst kurzer Fahrzeit zu errechnen.

Nebenbei fällt dann noch eine Information über die voraussichtliche Zeitdauer bis zum Erreichen des Zieles an, die an den Benutzer des Systems ausgegeben werden kann, sei es als Zeitspanne oder als vorausgesagte Ankunftszeit.

Derartige Navigationssysteme sind allerdings statisch im Bezug auf die äußeren Verhältnisse. Sie berücksichtigen nicht die tatsächlichen, auf der Strecke gefahrenen und erreichbaren Durchschnittsgeschwindigkeiten. Des Weiteren können solche Systeme nicht die Fahrgewohnheiten des Benutzers mit in die Routenplanung einbeziehen. Aus diesen Gründen liefert es meist nur eine ungenaue Angabe über die Zeit bis zum Erreichen des Ziels.

Des Weiteren führt eine solche statische Zuordnung von Durchschnittsgeschwindigkeiten zu bestimmten Teilstrecken oft zu längeren Fahrtwegen, als sie der Benutzer des Systems wünscht, oder unter Benutzung einer Straßenkarte wählen würde. Des Weiteren sind die vom System berechneten Routen abhängig von der Wahl der Durchschnittsgeschwindigkeiten häufig durch eine ungerechtfertigte Bevorzugung von höherklassigen Straßen wie etwa Autobahnen oder Bundesstraßen gekennzeichnet.

Aus der US 5,933,100 ist ein Navigationssystem in einem Fahrzeug bekannt, das personalisierte Verkehrsinformationen für eine Routenplanung bereitstellt. Für jedes befahrene Straßensegment wird die Reisezeit gespeichert und dem Segment in einer Kartendatenbasis zugeordnet. Für die einzelnen Straßensegmente können ferner diese Durchschnittsgeschwindigkeiten an eine Datenzentrale übergeben werden.

Vorteile der Erfindung

Das erfindungsgemäße Verfahren mit den Merkmalen des Anspruchs 1 weist gegenüber den bekannten Lösungsansätzen den Vorteil auf, dass die Routenberechnung nach einer gewissen "Einschwingzeit" für das häufig befahrene Umfeld bessere Routen erzeugen kann, wobei damit in den meisten Fällen eine kürzere Fahrzeit verbunden ist. Des weiteren sind die vom System berechneten Routen besser an das individuelle Fahrverhalten des Benutzers angepaßt. Dadurch wird die vom System abfragbare oder von diesem ausgegebene Zeit bis zum Erreichen des Ziels genauer.

Die der vorliegenden Erfindung zugrundeliegende Idee besteht darin, die oben beschriebene, statische Bewertung der Straßenklassen mittels fester, in das System eingegebenen Durchschnittsgeschwindigkeiten durch laufend nachgeführte, daß heißt aktualisierte Geschwindigkeitswerte zu ersetzen, bzw. zu ergänzen, falls erforderlich. Mit anderen Worten werden statt der im Stand der Technik als fest und unveränderbar vorgegebenen Straßenklassen-Geschwindigkeiten gewissermaßen im Fahrbetrieb vom System gelernte, tatsächlich erreichte Geschwindigkeiten zur Basis von Routenplanung und Vorhersage der Ankunftszeit, etc. gemacht. Dadurch, daß solche, vom System erlernten Durchschnittswerte der Fahrgeschwindigkeit in einem nicht flüchtigen Speicher abgelegt werden, sind sie auch nach Abschalten des Systems für eine erneute Routenplanung verfügbar.

Hierfür werden die im Fahrbetrieb verfügbaren Informationen über die zur Zeit befahrene Straßenklasse und die momentan gefahrene Geschwindigkeit wiederholt, beispielsweise im Abstand von 1 Sekunde oder länger miteinander für jede Straßenklasse getrennt verrechnet. Als Startwert für eine solche Berechnung kann beispielsweise die oben angegebene, feste Durchschnittsgeschwindigkeit verwendet werden, oder alternativ dazu eine vom Fahrer in das System einzugebende Geschwindigkeit.

Gemäß dem allgemeinen Aspekt der vorliegenden Erfindung werden also einem oder mehreren Teilabschnitten K einer jeweils befahrenen Straße ein dynamisch angepaßter Durchschnittswert für die Fahrzeuggeschwindigkeit zur Routenberechnung verwendet. Die entsprechende Verknüpfung von in der Implementation des Navigationssystems vorhandenen Datenbankfeldern ist also auch dynamisch. Das System adaptiert sich an die real vorliegenden Verhältnisse.

In den Unteransprüchen finden sich vorteilhafte Weiterbildungen und Verbesserungen des jeweiligen Gegenstandes der Erfindung.

Gemäß einer bevorzugten Weiterbildung erfolgt eine Filterung über die Zeit, um den für die Bewertung maßgeblichen Durchschnittswert der Fahrzeuggeschwindigkeit neu zu berechnen. Eine solche Filterung stellt eine besonders einfache Realisierung dar. Grundsätzlich sind jedoch auch andere Algorithmen möglich.

Gemäß einer weiteren bevorzugten Weiterbildung kann die Gewichtung des Einflusses dieser Adaption auf die Neuberechnung variabel vorgenommen werden. Damit ist es möglich, die Auswirkungen eines "Lernvorgangs" des Navigationssystems auf die gespeicherten Attributwerte für die Durchschnittsgeschwindigkeit eines jeweiligen Streckenabschnittes K zu mindern. Dies kann beispielsweise bei Schneefall oder anderen widrigen Witterungsverhältnissen sinnvoll sein, um seltene Ausnahmeereignisse nicht zur Basis eines Lernvorgangs für das Navigationssystem werden zu lassen. In einer einfachen Ausführung kann der Benutzer dafür beispielsweise zwischen starker, mittlerer und schwacher Gewichtung auswählen. Alternativ dazu können auch andere Gewichtungsfaktoren vom Benutzer eingebbar sein.

Dazu sei folgendes Schema gegeben:

Wenn v(t0,K) die feste, beim ersten Start des Systems vorgegebene Durchschnittsgeschwindigkeit für die Straßenklasse K, v(tn,K) die zum Zeitpunkt tn für die Straßenklasse K berechnete adaptierte Durchschnittsgeschwindigkeit, v(tn+1) die aktuell gefahrene Geschwindigkeit und x der Gewichtungsfaktor, mit dem der jeweils alte mit dem neuen Wert verknüpft wird, ist, dann ergibt sich zum Zeitpunkt tn+1 die aktuelle adaptierte Durchschnittsgeschwindigkeit für K als

$$v(t_{n+1}, K) = (1-x) \bullet v(t_n, K) + x \bullet v(t_{n+1}).$$

Dabei kommt es nicht darauf an, ob die Bewertung der Straßenklassen tatsächlich in der Einheit "km/h" erfolgt; wesentlich ist die Veränderung der Bewertungen in Abhängigkeit von tatsächlich erreichten Werten.

Um die in einem Fahrzyklus errechneten Werte später weiterverwenden zu können, ist eine Abspeicherung in einem nicht flüchtigen Speicher vorzusehen.

Ebenso wird die Einführung einer unteren und oberen Schranke für die jeweils gelernten Geschwindigkeiten vorgeschlagen; es wird wahrscheinlich im allgemeinen Fall zu eher ungünstigen Routenvorschlägen führen, wenn beispielsweise die Bewertung einer Autobahn niedriger als die einer Landstraße würde.

Gemäß einer weiteren bevorzugten Weiterbildung kann das erfinderische Verfahren dadurch verfeinert werden, daß eine Trennung in eine sogenannte Kurzzeit- und eine Langzeitadaption mit unterschiedlichen Zeitkonstanten und/ oder Gewichtungen $x_{kurz}$ beziehungsweise $x_{lang}$ vorgenommen wird: die Abstände zwischen $t_n$ und $t_{n+1}$ liegen bei der Kurzzeitadaption vorzugsweise im Sekundenbereich und bei der Langzeitadaption im Minutenbereich. Entsprechend dieser Trennung kann dann die gefahrene Geschwindigkeit im gewählten Zeitabschnitt berechnet werden. Auch kann der oben genannte Gewichtungsfaktor x größer oder kleiner gewählt werden, je nachdem wie sinnvoll es ist, dem aktuellen Geschwindigkeitswert einen größeren oder kleineren Einfluß in die Neuberechnung des Durchschnittswerts zu geben. Vorzugsweise werden die Werte aus der Langzeitadaption für die Routenberechnung verwendet und die der Kurzzeitadaption werden für die Aktualisierung der Zeitangabe bis zum Ziel verwendet.

Gemäß einer weiteren bevorzugten Weiterbildung kann ein Startwert für die Neuberechnung des für die Bewertung maßgeblichen Durchschnittswerts vom Benutzer des Systems vorgeschlagen werden und von ihm in das System eingegeben werden. Dies macht das System flexibler für individuelle Fahrgewohnheiten beziehungsweise für individuelle Streckengestaltungen.

Gemäß einer weiteren bevorzugten Weiterbildung kann das erfindungsgemäße Verfahren durch eine Adaption ohne explizite Berücksichtigung der Straßenklassen nur über die Durchschnittsgeschwindigkeit des Fahrzeugs mit entsprechenden prozentualen Auf- oder Abschlägen auf die Bewertungsfaktoren der einzelnen Straßenklassen vereinfacht werden. Der Durchschnittswert der Fahrzeuggeschwindigkeit wird dann auf Basis des aktuellen Durchschnittswertes der Fahrzeuggeschwindigkeit berechnet, und die vom System voreingestellte Gewichtung nach Straßenklassen verliert an Einfluß. Eine solche Maßnahme erhöht ebenfalls die Flexibilität des Navigationssystems.

Gemäß einer weiteren bevorzugten Weiterbildung kann dem Benutzer eine variabel einstellbare Einflußmöglichkeit bei von dem System zu erstellenden Routenvorschlägen gegeben werden, um den Einfluß von von dem System gelernter Werte zu mindern oder auszuschalten. Eine solche Ergänzung des erfinderischen Verfahrens kann über eine Statistik und Auswertung bezüglich der Länge der berechneten Routen erreicht werden: wenn der Benutzer häufig in der Umgebung seiner Wohnung, beispielsweise in einem Ballungszentrum, fährt, so werden durch erhöhtes Verkehrsaufkommen wie beispielsweise im Berufsverkehr die adaptierten Werte für die Straßenklassenbewertung eher niedrig sein. Wenn dann eine Route zu einem weiter entfernten Ziel berechnet werden soll, kann es sonst unter ungünstigen Umständen zu einer ungeschickten Routenauswahl beispielsweise wegen zu starker Berücksichtigung niederrangiger Straßen kommen. In einem solchen Fall wäre es beispielsweise günstiger, bei solchen atypischen Zielentfernungen einen Teil der Adaption durch eine Übersteuerung der vom System gelernten Werte in Richtung der aus langer Erfahrung gewonnenen oder vom Benutzer vorgegebenen Startwerte vorzunehmen.

ZEICHNUNGEN

Ausführungsbeispiele der Erfindung sind in den Zeichnungen dargestellt und in der nachfolgenden Beschreibung näher erläutert.

Es zeigen:

Fig. 1    einen Ausschnitt aus einem Kraftfahrzeugnavigationssystem mit den für die vorliegende Erfindung wesentlichen Elementen.

Fig. 2    zeigt ein schematisches Blockdiagramm mit den für das erfinderische Verfahren wesentlichen Schritten während der Fahrt gemäß einem bevorzugten Ausführungsbeispiel.

BESCHREIBUNG DER AUSFÜHRUNGSBEISPIELE

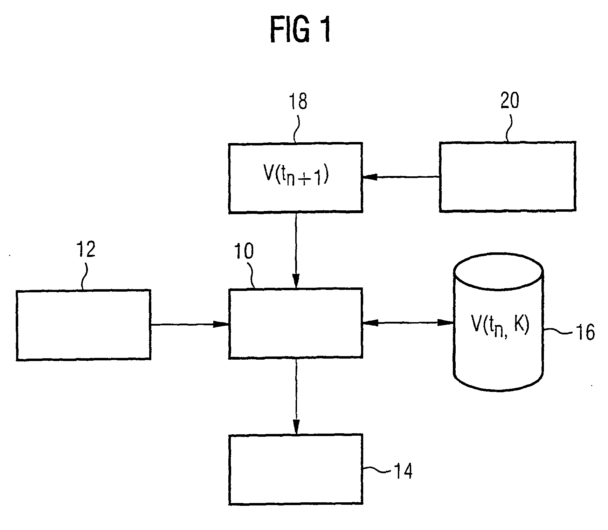

Fig. 1 zeigt einen Ausschnitt aus einem Kraftfahrzeugnavigationssystem mit den für die vorliegende Erfindung wesentlichen Elementen.

Ein Prozessor 10 ist mit einem Eingabegerät 12 zur Eingabe von Start- und Zielort sowie für die Eingabe von anderen Daten verbunden. Eine Ausgabe für den Fahrer kann optisch und akustisch über eine Ausgabeeinheit 14 erfolgen. Diese besteht im wesentlichen aus einem Display und zugehörigen Lautsprechern.

Des weiteren ist der Prozessor 10 mit einem Speicher 16 verbunden. Auf den Speicher 16 kann der Prozessor 10 lesend und schreibend zugreifen. In vorteilhafter Weise ist der Speicher 16 als nicht-flüchtiger Speicher ausgebildet. Aus diesem sollen, wie weiter unten genauer beschrieben, während der Fahrt aktualisierte Werte der momentanen Fahrzeugdurchschnittsgeschwindigkeit gelesen werden sowie neue Werte hineingeschrieben werden.

Des weiteren ist der Prozessor 10 über einen Mittelwertbildner 18 mit dem Geschwindigkeits-Signalgeber 20 des Kraftfahrzeugs verbunden. Über den Mittelwertbildner, der eine geeignete Logikschaltung mit integrierender Wirkung aus dem Stand der Technik sein kann, werden jeweils aktuelle, momentane Geschwindigkeitswerte vom Geschwindigkeits-Signalgeber 20 abgelesen und nach geeigneten Zeitintervallen zu einem für das jeweilige Zeitintervall signifikanten, arithmetischen, bzw. integrierten Mittelwert zusammengesetzt.

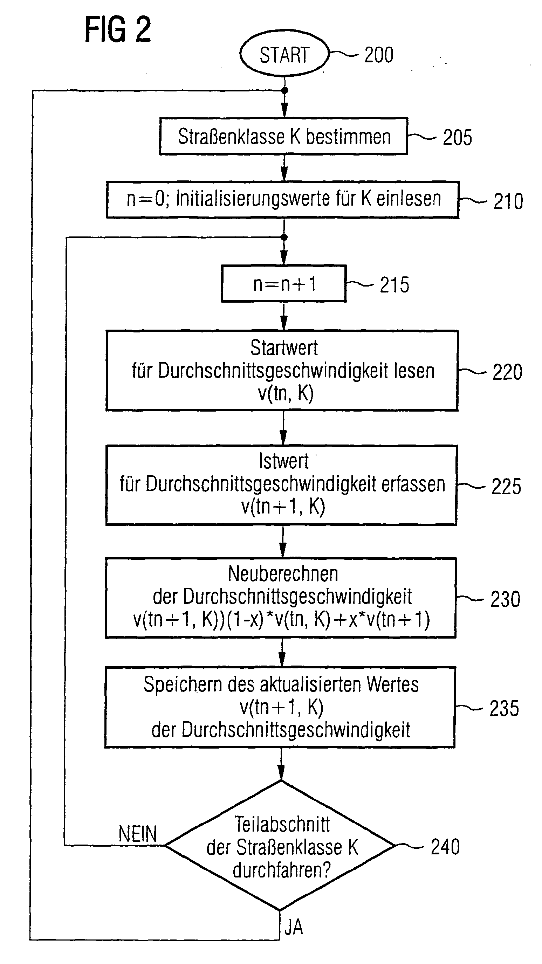

Fig. 2 zeigt ein schematisches Blockdiagramm mit den für das erfinderische Verfahren wesentlichen Schritten während der Fahrt gemäß einem bevorzugten Ausführungsbeispiel.

In einem Schritt 200 startet der Benutzer das System, und läßt in einem Schritt 205 die Straßenklasse K vom System bestimmen und kann danach den Zielort der Route eingeben.

Gemäß dem bevorzugten, in Fig. 2 dargestellten Ablauf des Ausführungsbeispiels werden in einer äußeren Schleife, deren Schleifenkörper nach Schritt 200 beginnt und mit der Entscheidung 240 endet, Verfahrensschritte für einen bestimmten als Einheit behandelten Streckenabschnitt K wiederholt. Die Durchschnittswerte der Fahrgeschwindigkeiten werden in wiederholter Weise zu bestimmten Zeitpunkten $t_n$, n=0, 1, 2... wiederholt. Diese Wiederholung ist in der inneren Schleife dargestellt, beginnend mit Schritt 215 und endend mit Schritt 240.

Im Schritt 210 wird n auf 0 gesetzt und sämtliche, für den Streckenabschnitt K (Stück der befahrenen Straßenklasse) spezifische Werte werden aus der Datenbank des Navigationssystems eingelesen, um sämtliche, für das Verfahren wesentliche Größen zu initialisieren. In einem weiteren Schritt 215 wird n um 1 erhöht.

Beim ersten Durchgang der inneren Schleife wird in einem Schritt 220 der oben erwähnte Startwert für die Durchschnittsgeschwindigkeit aus dem Speicher 16 gelesen. Danach wird in einem Schritt 225 der in dem Durchschnittsbildner 18 vorhandene Durchschnittsgeschwindigkeitswert, der auf tatsächlich soeben gefahrenen Geschwindigkeitsangaben vom Geschwindigkeits-Signalgeber 20 beruht, vom Prozessor 10 erfaßt.

Anschließend wird der für die Bewertung maßgebliche Durchschnittswert v $(t_{n+1},K)$ der Fahrzeuggeschwindig-keit gemäß folgender Formel berechnet:

$$v(t_{n+1},K) = (1-x) \bullet v(t_n,K) + x \bullet v(t_{n+1}).$$

Dieser neu berechnete Wert wird dann im Speicher 16 als aktualisierter Wert gespeichert, Schritt 235 und kann nun vom System zur Routenberechnung beziehungsweise zur Angabe der voraussichtlichen Ankunftszeit am Zielort verwendet werden.

Es ist offensichtlich, daß dieser neu berechnete Wert nach einem einzigen Schleifendurchlauf der inneren Schleife noch zu ungenau ist. In einem Schritt 240 wird dann festgestellt, ob sich das Kraftfahrzeug immer noch auf dem gleichen Teilabschnitt oder Streckenabschnitt K befindet. Sofern dies nicht der Fall ist, wird zurückverzweigt zu Schritt 215 und das Verfahren wird nach dem gleichen Ablauf fortgesetzt, wobei bei jedem Durchgang - einen normalen Fahrtverlauf vorausgesetzt - der im Speicher 16 gespeicherte Wert immer realistischer wird.

Falls dies nicht der Fall ist, so werden Vorbereitungen getroffen, um den nächsten Teilabschnitt K bearbeiten zu können. Je nach Implementierungsweise des Navigationssystems werden dann die entsprechenden Werte für diesen Teilabschnitt K aus der Datenbank gelesen, und es wird zu Schritt 205 zurückverzweigt. Dann wird das Verfahren nach dem gleichen Prinzip für diesen Teilabschnitt fortgesetzt.

Das Verfahren endet mit dem Abschalten des Systems.

Die innere Schleife kann in bevorzugter Weise relativ oft pro Minute durchlaufen werden. Bevorzugte Werte liegen in einem Intervall zwischen 60 mal pro Minute und 2 mal pro Minute.

Die äußere Schleife wird so oft wiederholt, wie es unterschiedliche Streckenabschnitte K auf der Route gibt.

Im folgenden wird der vorteilhafte Effekt des erfinderischen Verfahrens anhand einer Beispielrechnung betreffend einer Strecke von S nach Z veranschaulicht, wobei die Strecke über zwei alternative Routen zurückgelegt werden kann.

Die Route A besteht aus 10 km Landstraße (angenommene Durchschnittsgeschwindigkeit v(t0,Landstraße) = 60 km/h), 80 km Autobahn (100 km/h) und wieder 10 km Landstraße.

Die Alternativroute B besteht aus insgesamt 30 km Landstraße und 60 km Bundesstraße (80 km/h).

Damit ergibt sich bei festen Durchschnittsgeschwindigkeiten die Route A über die Autobahn (schnelle Route), die aber 10 km länger ist als Route B:

**Route A**

| | |
|---|---|
| 20 km Landstraße | 20 min |
| 80 km Autobahn | 48 min |
| | 68 min |

**Route B**

| | |
|---|---|
| 30 km Landstraße | 30 min |
| 60 km Bundesstraße | 45 min |
| | 75 min |

Die Straßenklassenbewertung gemäß dem gegebenen Ausführungsbeispiel kann nun verschiedene Fälle unterscheiden:

Der Benutzer fährt häufig in einer Gegend und zu einer Tageszeit, in der die Autobahn meist verstopft ist; die Durchschnittsgeschwindigkeit wird bis auf 80 km/h "heruntergelernt"; damit erweist sich der Weg über die Bundesstraße als die bessere Route:

**Route A**

| | |
|---|---|
| 20 km Landstraße | 20 min |
| 80 km Autobahn | 60 min |

|  |  |
|---|---|
|  | 80 min |

**Route B**

| 30 km Landstraße | 30 min |
|---|---|
| 60 km Bundesstraße | 45 min |
|  | 75 min |

Auch wenn sich die im Schnitt befahrenen Bundesstraßen schneller als erwartet darstellen (95 km/h), führt die durch Adaption veränderte Bewertung zur Route B, wenn auch in diesem Beispiel der Vorteil minimal ist:

**Route A**

| 20 km Landstraße | 20 min |
|---|---|
| 80 km Autobahn | 48 min |
|  | 68 min |

**Route B**

| 30 km Landstraße | 30 min |
|---|---|
| 60 km Bundesstraße | 37 min |
|  | 67 min |

Sollte der Benutzer des Systems eine zügige Fahrweise bevorzugen und freie Autobahnen vorfinden -die Durchschnittsgeschwindigkeit wird auf 120 km/h angehoben- wird durch die Adaption der Straßenbewertung der Fehler in Höhe von 11% in der Zeitangabe für die Route ausgeglichen:

**Feste Werte**

| 20 km Landstraße | 20 min |
|---|---|
| 80 km Autobahn | 48 min |
|  | 68 min |

**Adaptierte Werte**

| 20 km Landstraße | 20 min |
|---|---|
| 80 km Autobahn | 40 min |
|  | 60 min |

Die oben genannte und beschriebene Kurzzeitadaption kann die Zeitangabe bei auftretenden Staus noch besser korrigieren und dem herrschenden Straßenzustand anpassen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Beispielsweise kann die Frequenz, mit der die innere Schleife durchlaufen wird, der Rechenleistung des Navigationssystems angepaßt sein. Des weiteren ergeben sich offensichtlich noch andere mathematische Algorithmen, um aus der Vielzahl der vom Geschwindigkeits-Signalgeber über den Durchschnittswertbildner eingelesenen Geschwindigkeitsdurchschnitsswerte für das System brauchbare Werte zu liefern. Hier können sinnvoll verschiedene Filterfunktionen eingesetzt werden.

Des weiteren kann das System in sinnvoller Weise mit einer zusätzlichen Option ausgestattet sein, die es erlaubt, das erfinderische Verfahren temporär abzuschalten und statt dessen auf die im System vorhandenen Standardwerte der Straßenklassenbewertung zurückzugreifen. Dies hat den Vorteil, daß das System nicht "falsch" lernt, wenn der Fahrer beispielsweise irgendwo auf der Strecke anhält, um irgendetwas einzukaufen oder einen sonstigen, atypischen Zwischenstop einlegt.

Wenn das Fahrzeug abgeschaltet wird (Zündung aus); wird üblicherweise das Navigationsgerät abgeschaltet bzw. in einen Stand-By-Zustand versetzt. Es kann auch eine temporäre Abschaltmöglichkeit beim Betrieb als Zugfahrzeug (Abschleppen, Anhängerbetrieb) vorgesehen sein.

**Patentansprüche**

1. Verfahren zur Straßenklassenbewertung in einem Navigationssystem in einem Kraftfahrzeug, bei dem von dem Kraftfahrzeug Straßen mehrerer Straßenklassen befahren werden, wobei jeweils eine Durchschnittsgeschwindigkeit für die Straßenklassen ermittelt wird, wobei die Durchschnittsgeschwindigkeit v(tn, K) des Kraftfahrzeugs für eine Straßenklasse K während der Fahrt auf einer Straße der Straßenklasse K zu wiederholten Zeitpunkten tn, tn+1,... gemäß einer tatsächlich erreichten Geschwindigkeit v(tn), v(tn+1), ... durch eine Neuberechnung adaptiert wird.

2. Verfahren nach Anspruch 1, bei dem für die Neuberechnung der für die Bewertung maßgeblichen Durchschnittswert v(tn, K) der Fahrzeuggeschwindigkeit eine Filterung über die Zeit erfolgt.

3. Verfahren nach einem der vorstehenden Ansprüche, wobei eine variabel vornehmbare Gewichtung (23) des Einflusses der Adaption auf die Neuberechnung vorgesehen ist.

4. Verfahren nach einem der vorstehenden Ansprüche, wobei mit einer Kurzzeitadaption mit niedriger Zeitkonstante die Ankunftszeit am Zielort darstellbar ist, und mit einer Langzeitadaption mit größerer Zeitkonstante die Neuberechnung der für die Bewertung maßgeblichen Durchschnittswerte v(tn, K) der Fahrzeuggeschwindigkeit erfolgt.

5. Verfahren nach einem der vorstehenden Ansprüche, wobei ein Startwert für die Neuberechnung des für die Bewertung maßgeblichen Durchschnittswerts vom Benutzer des Systems vorgeschlagen werden kann.

6. Verfahren nach einem der vorstehenden Ansprüche, wobei für die Neuberechnung des für die Bewertung maßgeblichen Durchschnittswerts v(tn, K) der Fahrzeuggeschwindigkeit der aktuelle Durchschnittswert v(tn+1) als Basisgröße verwendet wird, und den unterschiedlichen Straßenklassen durch prozentuale Auf- oder Abschläge Rechnung getragen wird.

7. Verfahren nach einem der vorstehenden Ansprüche, den Schritt enthaltend, dem Benutzer eine variabel einstellbare Einflussmöglichkeit bei von dem System zu erstellenden Routenvorschlägen zur Ausschaltung oder Minderung des Einflusses von von dem System gelernten Werte zu geben.

8. Verfahren nach einem der vorhergehenden Ansprüche, **dadurch gekennzeichnet, dass** Durchschnittsgeschwindigkeiten für die Straßenklassen Landstraße, Bundesstraße und Autobahn bestimmt werden.

**Claims**

1. Method for assessing road class in a navigation system in a motor vehicle, in which the motor vehicle travels on roads in a plurality of road classes, where a respective average speed is ascertained for the road classes, with the average speed v(tn, K) of the motor vehicle being adapted for a road class K during the journey on a road in road class K at repeated times tn, tn+1, ... on the basis of an actually achieved speed v(tn), v(tn+1), ... by means of recalculation.

2. Method according to Claim 1, in which filtering is performed over time to recalculate the vehicle speed's average value v(tn, K) which governs the assessment.

3. Method according to one of the preceding claims, where provision is made for the influence of the adaptation on the recalculation to be able to be weighted (23) variably.

4. Method according to one of the preceding claims, where short-term adaptation with a short time constant can be used to show the arrival time at the destination, and long-term adaptation with a longer time constant is used to recalculate the vehicle speed's average values v(tn, K) which govern the assessment.

**5.** Method according to one of the preceding claims, where a starting value for recalculating the average value governing the assessment can be proposed by the user of the system.

**6.** Method according to one of the preceding claims, where for recalculating the vehicle speed's average value v(tn, K) governing the assessment the current average value v(tn+1) is used as a base variable, and the different road classes are taken into account by virtue of percentage surcharges or discounts.

**7.** Method according to one of the preceding claims, containing the step of providing the user with a variably adjustable means of influence for route proposals which are to be created by the system in order to eliminate or reduce the influence of values learnt by the system.

**8.** Method according to one of the preceding claims, **characterized in that** average speeds are determined for the road classes country road, national road and motorway.

**Revendications**

**1.** Procédé d'évaluation de classes routières dans un système de navigation dans un véhicule automobile qui roule sur des voies de différentes classes routières, en déterminant pour chaque classe routière K, une vitesse moyenne v(tn, K) du véhicule, adaptée par recalcul pendant la conduite à une voie de la classe routière K à des moments répétés tn, tn+1,... suivant une vitesse effectivement atteinte v(tn), v(tn+1),....

**2.** Procédé selon la revendication 1,
**caractérisé en ce qu'**
un filtrage sur le temps a lieu pour le recalcul de la valeur moyenne v(tn, K) de la vitesse du véhicule déterminante pour l'évaluation.

**3.** Procédé selon l'une quelconque des revendications précédentes,
**caractérisé en ce qu'**
on teste une pondération variable (23) de l'influence de l'adaptation sur le recalcul.

**4.** Procédé selon l'une quelconque des revendications précédentes, selon lequel le temps d'arrivée à la destination est représenté avec une adaptation à court terme avec de faibles constantes de temps, et le recalcul des valeurs moyennes v(tn, K) de la vitesse du véhicule déterminantes pour l'évaluation ayant lieu avec une adaptation à long terme avec des constantes de temps plus importantes.

**5.** Procédé selon l'une quelconque des revendications précédentes, selon lequel l'utilisateur du système peut proposer une valeur initiale pour le recalcul de la valeur moyenne déterminante pour l'évaluation.

**6.** Procédé selon l'une quelconque des revendications précédentes, selon lequel on utilise la valeur moyenne actuelle v(tn+1) comme grandeur de base pour le recalcul de la valeur moyenne v(tn+K) de la vitesse du véhicule déterminante pour l'évaluation, et les différentes classes routières sont prises en compte par des baisses ou des hausses proportionnelles.

**7.** Procédé selon l'une quelconque des revendications précédentes, comprenant l'étape consistant à donner à l'utilisateur la possibilité d'influencer de manière variable au niveau du réglage les possibilités d'itinéraire définies par le système pour supprimer ou atténuer l'influence des valeurs apprises par le système.

**8.** Procédé selon l'une quelconque des revendications précédentes,
**caractérisé en ce qu'**
on détermine des vitesses moyennes pour les classes routières route départementale, nationale et autoroute.

# FIG 1

# FIG 2

START — 200

Straßenklasse K bestimmen — 205

n=0; Initialisierungswerte für K einlesen — 210

n=n+1 — 215

Startwert
für Durchschnittsgeschwindigkeit lesen
v(tn, K) — 220

Istwert
für Durchschnittsgeschwindigkeit erfassen
v(tn+1, K) — 225

Neuberechnen
der Durchschnittsgeschwindigkeit
v(tn+1, K))(1-x)*v(tn, K)+x*v(tn+1) — 230

Speichern des aktualisierten Wertes
v(tn+1, K)
der Durchschnittsgeschwindigkeit — 235

NEIN

Teilabschnitt
der Straßenklasse K
durchfahren? — 240

JA

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5933100 A